# EUROPÄISCHE PATENTANMELDUNG

(11) **EP 2 546 595 A1**
(43) Veröffentlichungstag der Anmeldung: **16.01.2013**
(21) Anmeldenummer: 11174168.2
(22) Anmeldetag: 15.07.2011
(51) Int. Cl.: F28D 3/02, F03D 1/00

(54) **Kühlvorrichtung und Kühlverfahren**

(71) Anmelder: SIEMENS AKTIENGESELLSCHAFT, 80333 München (DE)
(72) Erfinder: Reimers, Jan-Dirk, 52074 Aachen (DE); Klein-Hitpass, Arno, 52074 Aachen (DE)

(57) **Zusammenfassung**

Die Erfindung betrifft eine Kühlvorrichtung, die insbesondere in Windkraftanlagen und Fahrzeugen Verwendung findet. Die Kühlvorrichtung umfasst einen mit Luft zu durchströmenden Kanal, in welchem eine Wärmeabgabeeinheit positioniert ist, wobei durch Einbringung von Wasser in Tropfenform in den Kanal unter Ausnutzung der Verdunstungsenthalpie von Wasser eine hohe Kühlleistung erzielt wird. Darüber hinaus betrifft die Erfindung ein Kühlverfahren sowie eine Windkraftanlage und ein Fahrzeug, in welchem eine erfindungsgemäße Kühlvorrichtung verwendet wird.

## Beschreibung

Die Erfindung betrifft eine Kühlvorrichtung umfassend wenigstens eine Wärmeabgabeeinheit mit einem Einlass und einem Auslass für ein flüssiges oder gasförmiges Medium und wenigstens einen mit Luft zu durchströmenden Kanal, der einen Lufteinlass und einen Luftauslass aufweist, wobei die Wärmeabgabeeinheit in dem Kanal positioniert ist. Des Weiteren betrifft die Erfindung ein Kühlverfahren, bei dem ein flüssiges oder gasförmiges Medium unter Abgabe von Wärme eine Wärmeabgabeeinheit durchströmt, die in einem mit Luft durchströmten Kanal positioniert ist, sowie eine Windkraftanlage und ein Fahrzeug, in welcher eine Kühlvorrichtung der eingangs genannten Art verwendet wird.

Derartige Kühlvorrichtungen sind aus dem Stand der Technik in verschiedenartigen Ausführungen bekannt. Die EP 2 163 761 offenbart beispielsweise eine Windkraftanlage mit einer Gondel, in welcher eine solche Kühlvorrichtung vorgesehen ist, um das Getriebe und den Generator der Windkraftanlage zu kühlen. Dazu sind an dem Getriebe und dem Generator Wärmeaufnahmeeinheiten vorgesehen, durch welche ein Medium zirkuliert, welches die im Betrieb erzeugte Wärme aufnimmt. Die Wärmeaufnahmeeinheiten sind unter Bildung eines geschlossenen Kühlkreislaufes jeweils mit einer Wärmeabgabeeinheit verbunden. Die Wärmeabgabeeinheiten befinden sich in einem innerhalb der Gondel ausgebildeten geschlossenen Kanal, der an seiner dem Rotor zugewandten Seite einen Lufteinlass und an seiner gegenüberliegenden Seite einen Luftauslass aufweist. Der Kanal wird im Betrieb mit Außenluft durchströmt. Dabei wird die Außenluft unter Aufnahme von Wärme an den Wärmeabgabeeinheiten vorbeigeführt, wodurch das die Wärmeabgabeeinheit durchströmende Medium abgekühlt wird.

Eine ähnliche Windkraftanlage ist aus der DE 10 2007 042 338 bekannt. Dort ist der mit Luft zu durchströmende Kanal, in welchem sich die Wärmeabgabeeinheit befindet an der Außenseite der Gondel vorgesehen.

Die Menge an Wärme, die von dem Getriebe und dem Generator abgeführt und in den Wärmeabgabeeinheiten an die vorbeiströmende Luft abgegeben werden kann, ist begrenzt und hängt von zahlreichen Parametern wie der Wärmekapazität des die Wärmeabgabeeinheiten durchströmenden Mediums, der mit der vorbeiströmenden Luft in Kontakt stehenden Oberfläche der Wärmeabgabeeinheiten, der Volumenstromdichte der Luft in dem Kanal und der Lufttemperatur ab. Insbesondere letztere beide Parameter variieren stark in Abhängigkeit der Jahreszeit und der aktuellen Wetterlage. Die Volumenstromdichte kann mit Hilfe des Gebläses eingestellt werden. Problematisch ist allerdings, dass bei hohen Außentemperaturen, wie sie insbesondere in den Sommermonaten auftreten, die durch die Luftkühlung erzielbare Kühlleistung vergleichsweise gering ist. Um Überhitzungen der Maschine vorzubeugen, kann der Betrieb der Windkraftanalage bei hohen Außentemperaturen demzufolge zum Teil nur eingeschränkt erfolgen oder muss gänzlich eingestellt werden.

Daher gibt es Bestrebungen, verbesserte Kühlsysteme bereitzustellen. In dem Dokument EP 2 251 544 beispielsweise wird ein Kühlsystem für einen Generator und/oder ein Getriebe in einer Windkraftanlage offenbart, bei dem der Generator zur verbesserten Abführung der im Betrieb erzeugten Wärme mit externen Kühlrippen versehen ist, durch die eine große für den Wärmeaustausch zur Verfügung stehende Oberfläche bereitgestellt wird. Weiterhin ist eine Hülle vorgesehen, die sich wenigstens über einen Teil des Generators erstreckt. Die Hülle ist derart gestaltet, dass zur Kühlung in die Gondel einströmende Luft gezielt über die Kühlrippen geführt wird. Diese Bauart ist mit einem erheblichen konstruktiven Aufwand und hohen Kosten verbunden. Darüber hinaus ist eine Nachrüstung für bestehende Systemen bei dieser Ausgestaltungsform nicht möglich, da die verbesserte Kühlung durch die konstruktive Ausgestaltung des Generators selbst bedingt ist.

Das Dokument EP 2 224 130 offenbart weiterhin ein Kühlsystem für eine Windkraftanlage, bei dem das zur Wärmeabfuhr von Bauteilen der Windkraftanalage eingesetzte Medium aktiv gekühlt wird. Die Kühlung erfolgt dabei unter Nutzung der an den Bauteilen im Betrieb vorhandenen Wärmeenergie. Dafür muss jedoch ein aufwendiges Kühlsystem bereitgestellt werden, was als nachteilig erachtet wird.

Ausgehend von diesem Stand der Technik ist es eine Aufgabe der vorliegenden Erfindung, eine Kühlvorrichtung der eingangs genannten Art anzugeben, die sich durch eine hohe Kühlleistung auszeichnet und welche auf einfachem Wege und kostengünstig konstruktiv umgesetzt werden kann.

Diese Aufgabe wird erfindungsgemäß dadurch gelöst, dass in dem Kanal in Luftströmungsrichtung vor der Wärmeabgabeeinheit wenigstens eine Sprüh- und/oder Rieseleinrichtung vorgesehen ist, über die Wasser in Tropfenform in den Kanal eingebracht wird.

Der Erfindung liegt demgemäß die Idee zugrunde, die Verdunstungsenthalpie von Wasser auszunutzen, um die zum Wärmeabtransport an der Wärmeabgabeeinheit vorbeiströmende Luft zu kühlen. Dazu wird in den Kanal Wasser in Tropfenform eingebracht, welches in nennenswerten Mengen verdunstet. Der Verdunstungsvorgang beginnt unmittelbar nach Einbringung des Wassers in den Kanal, erfolgt jedoch insbesondere in der unmittelbaren Umgebung der Wärmeabgabeeinheit. Die für den Verdunstungsvorgang benötigte Energie wird dabei der Umgebung entzogen. Durch die Einbringung des Wassers wird demzufolge die Kühlleistung erhöht mit dem Ergebnis, dass auch bei hohen Außentemperaturen eine ausreichende Kühlung sichergestellt werden kann.

Das Wasser kann - beispielsweise am Lufteinlass oder direkt vor der Wärmeabgabeeinheit - in den Luftstrom mittels einer Düse oder dergleichen eingesprüht werden. Dabei ist es besonders vorteilhaft, wenn die Einbringung in Strömungsrichtung der durch den Kanal strömenden Luft erfolgt. Alternativ oder zusätzlich kann eine Rieseleinrichtung vorgesehen sein, in welcher der Luftstrom durch in dem Kanal von oben nach unten rieselndes Wasser geführt wird.

In an sich bekannter Weise kann eine Wärmeaufnahmeeinheit vorgesehen sein, die mit dem Einlass und dem Auslass der Wärmeabgabeeinheit unter Bildung eines geschlossenen Kühlkreislaufes verbunden ist. In der Wärmeaufnahmeeinheit wird von dem durch den Kühlkreislauf zirkulierenden Medium Wärme von zu kühlenden Bauteilen aufgenommen. Über das Medium wird diese zu der Wärmeabgabeeinheit transportiert, an welcher die Wärme über die durch den Kanal strömende Luft, in welche Wasser eingebracht wird, in großen Mengen abgeführt werden kann.

Bei dem Medium kann es sich auch um ein Schmiermittel, insbesondere ein Getriebeöl handeln, wobei die erfindungsgemäße Kühlvorrichtung dann zur direkten Kühlung des Getriebeöls eingesetzt wird.

In einem Ausführungsbeispiel der Erfindung ist vorgesehen, dass der Sprüh- und/oder Rieseleinrichtung eine Steuervorrichtung zugeordnet ist, über welche der Betrieb der Sprüh- und/oder Rieseleinrichtung und insbesondere die Menge des in den Kanal eingebrachten Wassers gesteuert wird. Durch die Steuervorrichtung wird die Möglichkeit geschaffen, die Sprüh- und/oder Rieseleinrichtung bedarfsgerecht zu steuern. Beispielsweise kann ein Temperatursensor zur Erfassung der Temperatur der den Kanal durchströmenden Luft vorgesehen und mit der Steuervorrichtung verbunden sein, wobei die Steuervorrichtung die Sprüh- und/oder Rieseleinrichtung dann derart steuert, dass die Menge des in den Kanal eingebrachten Wassers von der erfassten Temperatur abhängt.
Beispielsweise kann vorgesehen sein, dass Wasser in den Kanal nur eingebracht wird, wenn die erfasste Temperatur oberhalb einer gewählten Temperatur liegt. Mit anderen Worten erfolgt die Zufuhr von Wasser nur, wenn die Außentemperaturen so hoch sind, dass keine ausreichende Kühlung durch die Außenluft allein möglich ist. Dann wird durch die gezielte Einbringung von Wasser in den Kanal eine ausreichende Kühlleistung gewährleistet.

Dabei kann die Menge des eingebrachten Wassers in Abhängigkeit der vorliegenden Temperatur reguliert werden, wobei eine größere Menge Wasser eingebracht wird, wenn höhere Temperaturen vorliegen.

In weiterer Ausgestaltung der vorliegenden Erfindung kann vorgesehen sein, dass der Sprüh- und/oder Rieseleinrichtung ein Ventil zugeordnet ist und die Steuervorrichtung das Ventil derart steuert, dass 0,5 bis 10 g Wasser pro kg Luftstrommasse in den Kanal eingebracht werden. Diese Wassermengen haben sich als besonders vorteilhaft erwiesen, um die bei hohen Außentemperaturen benötigte Kühlleistung bereitzustellen.

Gemäß einer bevorzugten Ausführungsform der Erfindung ist in dem Kanal eine Fördereinrichtung für die Luft, insbesondere ein Gebläse vorgesehen, wodurch eine ausreichende Volumenstromstärke der Luft erzielt wird. Dieses Gebläse kann dauerhaft oder nur temporär zugeschaltet werden, wenn der Luftstrom in dem Kanal nicht ausreicht. Im normalen Betrieb einer Windkraftanalage ist dies im Allgemeinen nicht der Fall, da eine ausreichend hohe Windgeschwindigkeit vorliegt. Ist die Kühlvorrichtung an einem Fahrzeug vorgesehen, liegt infolge der Bewegung des Fahrzeugs im Allgemeinen auch ein ausreichend hoher Luftstrom vor, und es muss nicht aktiv mit Hilfe eines Gebläses Luft durch den Kanal gefördert werden.

Wie bereits aus der Druckschrift EP 2 163 761 vorbekannt, kann gemäß einer bevorzugten Ausführungsform vorgesehen sein, dass der Kanal in mehrere parallel von Luft durchströmte Kanalabschnitte unterteilt ist, in denen jeweils wenigstens eine Wärmeabgabeeinheit positioniert ist, und dass mehreren Wärmeabgabeeinheiten in den Kanalabschnitten jeweils eine Sprüh- und/oder Rieseleinrichtung zugeordnet ist. Diese Ausführungsform ist besonders geeignet, wenn die parallele Kühlung mehrere Bauteile erforderlich ist. In diesem Falle kann beispielsweise jedem Bauteil jeweils eine Wärmeabgabeeinheit oder ein Kanalabschnitt mit wenigstens einer Wärmeabgabeeinheit zugeordnet sein. Es wird eine besonders hohe Gesamtkühlleistung erzielt, da in mehreren Kanalabschnitten erfindungsgemäß eine hohe Kühlleistung erzielt wird.

Weiterhin kann, wie ebenfalls der EP 2 163 761 entnommen werden kann vorgesehen sein, dass mehrere Wärmeabgabeeinheiten in Strömungsrichtung hintereinanderliegend in dem Kanal oder parallel von Luft durchströmten Kanalabschnitten positioniert sind, und dass mehreren der hintereinander liegenden Wärmeabgabeeinheiten jeweils eine Sprüh- und/oder Rieseleinrichtung zugeordnet ist. Auch durch diese Ausgestaltungsform wird eine hohe Gesamtkühlleistung gewährleistet und es können besonders vorteilhaft mehrere Bauteile gleichzeitig gekühlt werden.

Bei einer weiteren Ausführungsform der Erfindung ist ein Wassertank vorgesehen, der über eine Leitung mit der Sprüh- und/oder Rieseleinrichtung verbunden ist. In dem Tank wird das Wasser bereitgestellt, welches mit Hilfe der Sprüh- und/oder Rieseleinrichtung in den Kanal eingebracht wird. Dabei ist in vorteilhafter Ausführung an dem Wassertank eine Auffangvorrichtung für Regenwasser vorgesehen, die einen Filter zur Filterung des Regenwassers umfasst. So kann Regenwasser aufgefangen und gefiltert werden, um es anschließend über die Sprüh- und/oder Rieseleinrichtung in den Kanal einzubringen und es muss keine externe Wasserquelle zur Verfügung gestellt werden. Die Auffangvorrichtung ist idealer Weise in der Nähe der Sprüh- und/oder Rieseleinrichtung vorgesehen, so dass das Wasser nicht über lange Wege zu dieser gepumpt werden muss.

Darüber hinaus kann an dem Wassertank ein Wasserauslass vorgesehen sein, um den Wassertank in die Umgebung der Kühlvorrichtung zu entleeren. In diesem Fall ist zweckmäßiger Weise eine Steuervorrichtung für den Wasserauslass und ein Temperatursensor zur Erfassung der Außentemperatur vorgesehen, wobei die Steuervorrichtung den Wasserauslass betätigt, um den Wassertank im Wesentlichen vollständig zu entleeren, wenn die erfasste Außentemperatur unterhalb einer vorgegebenen Temperatur liegt. Durch diese Ausführungsform wird Frostschäden an der Kühlvorrichtung vorgebeugt. In den Wintermonaten wird die mit der Einbringung des Wassers in den Luftstrom verbundene zusätzliche Kühlleistung im Allgemeinen nicht benötigt, da die Außentemperaturen niedrig sind und bereits eine ausreichende Kühlleistung zur Verfügung steht. Der Tank sollte in dieser Zeit geleert werden, um zu verhindern, dass das darin befindliche Wasser gefriert. Dazu betätigt die Steuervorrichtung den Wasserauslass bei Unterschreiten einer vorgegebenen Außentemperatur. Alternativ oder zusätzlich kann die Leerung auch regelmäßig zu einem vorgegebenen Datum im Jahr erfolgen.

Die erfindungsgemäße Kühlvorrichtung kann insbesondere in einer Windkraftanlage mit einer Gondel vorgesehen sein. Dann erstreckt sich der mit Luft zu durchströmende Kanal, in welchem sich die Wärmeabgabeeinheit befindet, durch die Gondel oder ist an der Gondel ausgebildet und ist die Wärmeaufnahmeeinheit an wenigstens einem Bauteil der Windkraftanlage angeordnet, welches im Betrieb gekühlt werden muss.

Darüber hinaus kann die erfindungsgemäße Kühlvorrichtung auch in einem Fahrzeug, insbesondere Schienen- oder Wasserfahrzeug genutzt werden. Dann ist der mit Luft zu durchströmende Kanal an dem Fahrzeug ausgebildet und ist die Wärmeaufnahmeeinheit an einem von Fahrzeuginnenraumluft zu durchströmenden Kanal angeordnet, um eine Kühlung der Fahrzeuginnenraumluft zu erzielen. Der Kanal ist dabei vorzugsweise an dem Dach des Fahrzeugs vorgesehen. Die erfindungsgemäße Kühlvorrichtung kann in Fahrzeugen insbesondere als Klimaanalage verwendet werden, deren Kühlleistung bei hohen Außentemperaturen auf Bedarf durch die Einbringung von Wasser in den Kanal erhöht wird. Besonders in Fahrzeugen, die der Beförderung von Personen dienen, ist der Einsatz von Klimaanlagen erforderlich, die auch bei sehr hohen Außentemperaturen zuverlässig die benötigte Kühlleistung erbringen. Reicht die Kühlleistung nicht aus, oder muss die Klimaanlage beispielsweise deaktiviert werden, da eine Überhitzung droht, so kann die Temperatur im Innenraum auf einen für die Personen unangenehmen Wert ansteigen. Im Extremfall kann dies die Gesundheit der in dem Fahrzeug befindlichen Personen gefährden. Dieses Problem kann beispielsweise umgangen werden, indem bestehende Klimaanlagen auf eine erfindungsgemäße Kühlvorrichtung nachgerüstet werden. Dies ist konstruktiv auf einfachem Wege umzusetzen, indem eine Sprüh- und/oder Rieselvorrichtung in einem von Luft zu durchströmenden Kanal der Klimaanlage, in welcher sich eine Wärmeabgabeeinheit befindet, platziert wird.

Schließlich betrifft ein weiterer Gegenstand der vorliegenden Erfindung ein Kühlverfahren, bei dem auf bereits beschriebene Art und Weise durch Einbringung von Wasser in Tropfenform mittels einer Sprüh- und/oder Rieseleinrichtung in einen mit Luft zu durchströmenden Kanal eine hohe Kühlleistung bereitgestellt wird.

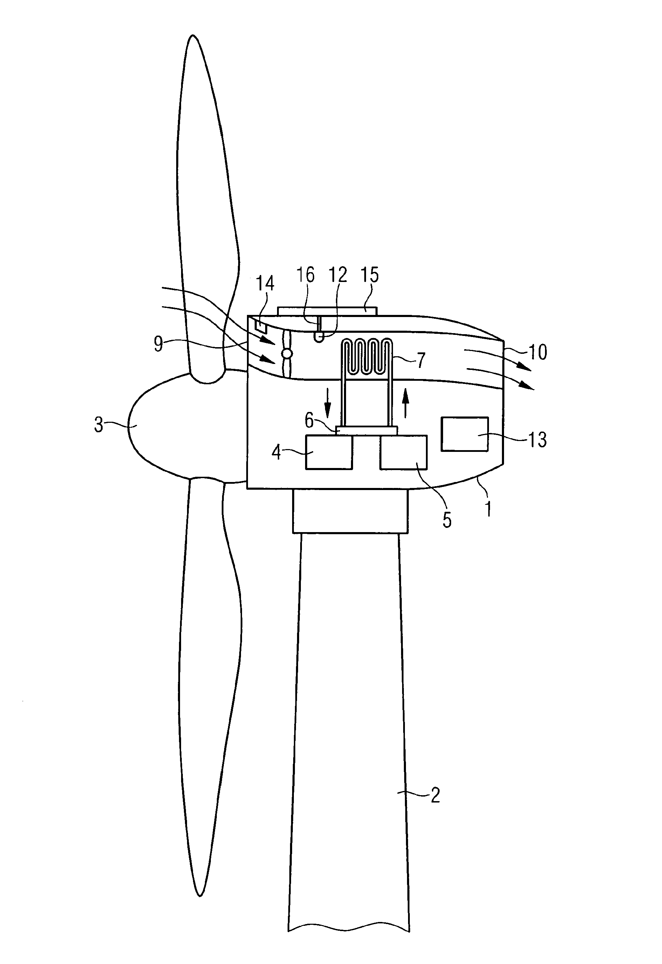

Hinsichtlich weiterer Vorteilhafter Ausgestaltungen und Weiterbildungen der Erfindung wird auf die Unteransprüche sowie nachfolgende Beschreibung eines Ausführungsbeispieles unter Bezugnahme auf die beiliegende Zeichnung verwiesen. In der Zeichnung zeigt die einzige Figur in schematischer Darstellung eine Windkraftanlage mit einer Gondel, in der eine erfindungsgemäße Kühlvorrichtung vorgesehen ist.

Die Windkraftanlage umfasst eine Gondel 1, die am oberen Ende einer Stütze 2 vorgesehen ist. An der Gondel ist stirnseitig ein Rotor 3 drehbar befestigt, der bei Vorliegen einer ausreichenden Windgeschwindigkeit in Rotation versetzt wird. Der Rotor 3 ist über ein in der Gondel 1 angeordnetes Getriebe 4 mit einem ebenfalls in der Gondel 1 platzierten Generator 5 verbunden, in welchem infolge der Bewegung des Rotors 3 in an sich bekannter Weise Strom erzeugt wird.

Im Betrieb erwärmen sich Getriebe 4 und Generator 5 und müssen gekühlt werden. Zu diesem Zweck ist eine erfindungsgemäße Kühlvorrichtung in der Gondel 1 vorgesehen. Diese umfasst eine Wärmeaufnahmeeinheit 6, die dem Getriebe 4 und dem Generator 5 zugeordnet und unmittelbar an diesen positioniert ist, um von diesen Wärme aufzunehmen. Des Weiteren gehört zu der Kühleinrichtung eine Wärmeabgabeeinheit 7, die mit der Wärmeaufnahmeeinheit 6 unter Bildung eines geschlossenen Kühlkreislaufes verbunden ist, in welchem ein flüssiges oder gasförmiges Medium zirkuliert. Ferner umfasst die Kühlvorrichtung einen im Wesentlichen geschlossenen Kanal 8, der in der Gondel 1 ausgebildet ist und sich von der Vorderseite zur Rückseite der Gondel 1 erstreckt. Der Kanal 8 weist an seiner dem Rotor 3 zugewandten Vorderseite einen Lufteinlass 9 und an der gegenüberliegenden Rückseite einen Luftauslass 10 auf. Zur Förderung der Luft in dem Kanal 8 ist nahe dem Lufteinlass 9 ein Gebläse 11 angeordnet.

In dem Kanal 8 ist die Wärmeabgabeeinheit 7 positioniert. Des Weiteren in dem Kanal 8 in Luftströmungsrichtung vor der Wärmeabgabeeinheit 7 der Kühlvorrichtung eine Düse 12 vorgesehen, über die Wasser in Tropfenform in den Kanal 8 eingebracht werden kann. Die Düse 12 ist dabei so gerichtet, dass das Wasser in der Luftströmungsrichtung eingesprüht wird.

Die Kühlvorrichtung besitzt eine zentrale Steuervorrichtung 13, über welche die Komponenten der Kühlvorrichtung gesteuert werden. Insbesondere steuert die Steuervorrichtung 13 den Betrieb der Düse 12 und speziell die Menge des in den Kanal 8 eingebrachten Wassers. Weiterhin ist ein Temperatursensor 14 zur Erfassung der Temperatur der den Kanal 8 durchströmenden Luft vorgesehen und mit der Steuervorrichtung 13 verbunden, und die Steuervorrichtung 13 steuert die Düse 12 derart, dass die Menge des in den Kanal 8 eingebrachten Wassers von der erfassten Temperatur abhängt. Dabei wird nur Wasser in den Kanal 8 eingebracht, wenn die erfasste Temperatur oberhalb einer kritischen gewählten Temperatur liegt, d.h. wenn die Außentemperaturen so hoch sind, dass keine ausreichende Kühlung durch die Außenluft allein möglich ist. Dann wird durch die gezielte Einbringung von Wasser in den Kanal 8 eine ausreichende Kühlleistung gewährleistet. Ferner wird die Menge des Wassers derart gesteuert, dass bei höheren Temperaturen mehr und bei niedrigeren Temperaturen weniger Wasser in den Kanal gesprüht wird, wobei sich die in den Kanal eingebrachte Wassermenge idealerweise auf etwa 0,5 bis 10 g Wasser pro kg Luftstrommasse beläuft. Diese Werte haben sich als geeignet erwiesen, um eine ausreichende zusätzliche Kühlleistung für die Bauteile einer Windkraftanalage in den Sommermonaten bereitzustellen.

Auf dem Dach der Gondel 1 ist ein Wassertank 15 vorgesehen, der über eine Leitung 16 mit der Düse 12 verbunden ist. An dem Wassertank 15 ist ein nicht eingezeichneter Wasserauslass vorgesehen, um den Wassertank 15 in die Umgebung der Kühlvorrichtung zu entleeren. Die Steuervorrichtung 13 steuert den Wasserauslass und mit dem Temperatursensor 14 wird die Außentemperatur erfasst. Die Steuervorrichtung 13 betätigt den Wasserauslass, um den Wassertank 15 im Wesentlichen vollständig zu entleeren, wenn die erfasste Außentemperatur unterhalb einer vorgegebenen Temperatur liegt. Alternativ oder zusätzlich kann dies einmal jährlich vor Winterbeginn erfolgen.

Der Wassertank 15 weist eine ebenfalls nicht dargestellte Auffangvorrichtung für Regenwasser auf, die einen Filter zur Filterung des Regenwassers umfasst. So kann Regenwasser aufgefangen, gefiltert und in den Wassertank 15 geleitet werden und bei Bedarf mittels der Düse 12 in den Kanal 8 eingebracht werden. Es muss keine externe Wasserquelle zur Verfügung gestellt werden. Die Auffangvorrichtung ist idealer Weise an der Oberseite des Wassertanks 15 angeordnet, wo eine große Fläche für den Auffang genutzt werden kann. Die Auffangvorrichtung hat darüber hinaus den Vorteil, dass das Wasser an der Gondel 1 und somit in der Nähe der Düse 12 gesammelt wird und nicht von einer am Boden befindlichen externen Wasserquelle zur Gondel 1 heraufgepumpt werden muss.

Im Betrieb wird der Rotor 3 bei Vorhandensein einer ausreichenden Windgeschwindigkeit gedreht und in dem Generator 5, der mit dem der Rotor 3 über das Getriebe 4 verbunden ist, wird Strom erzeugt. Getriebe 4 und Generator 5 erwärmen sich, und die erzeugte Wärme wird an der Wärmeaufnahmeeinheit 6 auf das in dem Kühlkreislauf zirkulierende Medium übertragen. In der in dem Kanal 8 platzierten Wärmeabgabeeinheit 7 wird die Wärme von dem Medium an die vorbeiströmende Luft abgegeben. Die Temperatur der den Kanal 8 durchströmenden Luft wird dabei kontinuierlich durch den Temperatursensor 14 überwacht. Wird eine Temperatur erfasst, die oberhalb einer kritischen vorgegebenen Temperatur liegt, ab der keine ausreichende Kühlung mehr zu erfolgen droht, wird die Düse 12 betätigt und Wasser in Tropfenform in den Kanal 8 eingesprüht. Das Wasser verdunstet in nennenswerten Mengen in die Luft. Der Verdunstungsvorgang beginnt unmittelbar nach Einbringung des Wassers in den Kanal 8, erfolgt jedoch insbesondere in der unmittelbaren Umgebung der Wärmeabgabeeinheit 7. Die für den Verdunstungsvorgang benötigte Energie wird dabei der Umgebung entzogen. Durch die Einbringung des Wassers wird demzufolge die Kühlleistung erhöht mit dem Ergebnis, dass auch bei hohen Außentemperaturen eine ausreichende Kühlung des Getriebes 4 und des Generators 5 der Windkraftanlage sichergestellt werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Kühlvorrichtung umfassend wenigstens eine Wärmeabgabeeinheit (7) mit einem Einlass und einem Auslass für ein flüssiges oder gasförmiges Medium und wenigstens einen mit Luft zu durchströmenden Kanal (8), der einen Lufteinlass (9) und einen Luftauslass (10) aufweist, wobei die Wärmeabgabeeinheit (7) in dem Kanal (8) positioniert ist, **dadurch gekennzeichnet, dass** in dem Kanal (8) in Luftströmungsrichtung vor der Wärmeabgabeeinheit (7) wenigstens eine Sprüh- und/oder Rieseleinrichtung (12) vorgesehen ist, über die Wasser in Tropfenform in den Kanal (8) eingebracht wird.

2. Kühlvorrichtung nach Anspruch 1, **dadurch gekennzeichnet, dass** eine Wärmeaufnahmeeinheit (6) vorgesehen ist, die mit dem Einlass und dem Auslass der Wärmeabgabeeinheit (7) unter Bildung eines geschlossenen Kühlkreislaufes verbunden ist.

3. Kühlvorrichtung nach einem der vorhergehenden Ansprüche, **dadurch gekennzeichnet, dass** der Sprüh- und/oder Rieseleinrichtung (12) eine Steuervorrichtung (13) zugeordnet ist, über welche der Betrieb der Sprüh- und/oder Rieseleinrichtung (12) und insbesondere die Menge des in den Kanal (8) eingebrachten Wassers gesteuert wird.

4. Kühlvorrichtung nach Anspruch 3, **dadurch gekennzeichnet, dass** ein Temperatursensor (14) zur Erfassung der Temperatur der den Kanal (8) durchströmenden Luft vorgesehen und mit der Steuervorrichtung (13) verbunden ist, und dass die Steuervorrichtung (13) die Sprüh- und/oder Rieseleinrichtung (12) derart steuert, dass die Menge des in den Kanal (8) eingebrachten Wassers von der erfassten Temperatur abhängt.

5. Kühlvorrichtung nach Anspruch 4, **dadurch gekennzeichnet, dass** die Steuervorrichtung (13) die Sprüh- und/oder Rieseleinrichtung (12) derart steuert, dass nur Wasser in den Kanal (8) eingebracht wird, wenn die erfasste Temperatur oberhalb einer gewählten Temperatur liegt.

6. Kühlvorrichtung nach einem der Ansprüche 3 bis 5, **dadurch gekennzeichnet, dass** der Sprüh- und/oder Rieseleinrichtung (12) ein Ventil zugeordnet ist und die Steuervorrichtung (13) das Ventil derart steuert, dass 0,5 bis 10 g Wasser pro kg Luftstrommasse in den Kanal (8) eingebracht werden.

7. Kühlvorrichtung nach einem der vorhergehenden Ansprüche, **dadurch gekennzeichnet, dass** in dem Kanal (8) eine Fördereinrichtung für die Luft, insbesondere ein Gebläse (11) vorgesehen ist.

8. Kühlvorrichtung nach einem der vorhergehenden Ansprüche, **dadurch gekennzeichnet, dass** der Kanal (8) in mehrere parallel von Luft durchströmte Kanalabschnitte unterteilt ist, in denen jeweils wenigstens eine Wärmeabgabeeinheit (7) positioniert ist, und dass mehreren Wärmeabgabeeinheiten (7) in den Kanalabschnitten jeweils eine Sprüh- und/oder Rieseleinrichtung (12) zugeordnet ist.

9. Kühlvorrichtung nach einem der vorhergehenden Ansprüche, **dadurch gekennzeichnet, dass** mehrere Wärmeabgabeeinheiten (7) in Strömungsrichtung hintereinander liegend in dem Kanal (8) oder parallel von Luft durchströmten Kanalabschnitten positioniert sind, und dass mehreren der hintereinander liegenden Wärmeabgabeeinheiten (7) jeweils eine Sprüh- und/oder Rieseleinrichtung (12) zugeordnet ist.

10. Kühlvorrichtung nach einem der vorhergehenden Ansprüche, **dadurch gekennzeichnet, dass** ein Wassertank (15) vorgesehen ist, der über eine Leitung (16) mit der Sprüh- und/oder Rieseleinrichtung (12) verbunden ist.

11. Kühlvorrichtung nach Anspruch 10, **dadurch gekennzeichnet, dass** an dem Wassertank (15) ein Wasserauslass vorgesehen ist, um den Wassertank (15) in die Umgebung der Kühlvorrichtung zu entleeren, dass eine Steuervorrichtung (13) für den Wasserauslass und ein Temperatursensor (14) zur Erfassung der Außentemperatur vorgesehen sind und die Steuervorrichtung (13) den Wasserauslass betätigt, um den Wassertank (15) im Wesentlichen vollständig zu entleeren, wenn die erfasste Außentemperatur unterhalb einer vorgegebenen Temperatur liegt.

12. Kühlvorrichtung nach einem der vorhergehenden Ansprüche, **dadurch gekennzeichnet, dass** an dem Wassertank (15) eine Auffangvorrichtung für Regenwasser vorgesehen ist, die einen Filter zur Filterung des Regenwassers umfasst.

13. Windkraftanlage mit einer Gondel (1) und einer Kühlvorrichtung, die wenigstens eine Wärmeabgabeeinheit (7) mit einem Einlass und einem Auslass für ein flüssiges oder gasförmiges Medium, eine Wärmeaufnahmeeinheit (6), die mit dem Einlass und dem Auslass der Wärmeabgabeeinheit (7) unter Bildung eines geschlossenen Kühlkreislaufes verbunden ist, und wenigstens einen sich in der Gondel (1) erstreckenden oder an der Gondel ausgebildeten mit Luft zu durchströmenden Kanal (8), der einen Lufteinlass (9) und einen Luftauslass (10) aufweist, umfasst, wobei die Wärmeabgabeeinheit (7) in dem Kanal (8) positioniert ist und die Wärmeaufnahmeeinheit (6) an wenigstens einem Bauteil der Windkraftanalage angeordnet ist, welches im Betrieb einer Temperaturerhöhung unterliegt, **dadurch gekennzeichnet, dass** die Kühlvorrichtung nach einem der Ansprüche 2 bis 12 ausgebildet ist.

14. Fahrzeug, insbesondere Schienen- oder Wasserfahrzeug mit einer Kühlvorrichtung, die wenigstens eine Wärmeabgabeeinheit (7) mit einem Einlass und einem Auslass für ein flüssiges oder gasförmiges Medium, eine Wärmeaufnahmeeinheit (6), die mit dem Einlass und dem Auslass der Wärmeabgabeeinheit (7) unter Bildung eines geschlossenen Kühlkreislaufes verbunden ist, und wenigstens einen an dem Fahrzeug ausgebildeten mit Luft zu durchströmenden Kanal (8), der einen Lufteinlass (9) und einen Luftauslass (10) aufweist, umfasst, wobei die Wärmeabgabeeinheit (7) in dem Kanal (8) positioniert ist und die Wärmeaufnahmeeinheit (6) an wenigstens einem von Fahrzeuginnenraumluft zu durchströmenden Kanal angeordnet ist, **dadurch gekennzeichnet, dass** die Kühlvorrichtung nach einem der Ansprüche 2 bis 12 ausgebildet ist.

15. Kühlverfahren bei dem ein flüssiges oder gasförmiges Medium unter Abgabe von Wärme eine Wärmeabgabeeinheit (7) durchströmt, die in einem mit Luft durchströmten Kanal (8) positioniert ist, **dadurch gekennzeichnet, dass** in dem Kanal (8) in Luftströmungsrichtung vor der Wärmeabgabeeinheit (7) mittels einer Sprüh- und/oder Rieseleinrichtung (12) Wasser in Tropfenform in den Kanal (8) eingebracht wird.

16. Kühlverfahren nach Anspruch 15, **dadurch gekennzeichnet, dass** das Medium Wärme in einer Wärmeaufnahmeeinheit (6) aufnimmt, die mit der Wärmeabgabeeinheit (7) unter Bildung eines geschlossenen Kühlkreislaufs verbunden ist.

17. Kühlverfahren nach Anspruch 15 oder 16, **dadurch gekennzeichnet, dass** der Betrieb der Sprüh- und/oder Rieseleinrichtung (12) und insbesondere die Menge des in den Kanal (8) eingebrachten Wassers gesteuert wird.

18. Kühlverfahren nach einem der Ansprüche 15 bis 17, **dadurch gekennzeichnet, dass** die Temperatur der den Kanal (8) durchströmenden Luft überwacht wird, und dass die Sprüh- und/oder Rieseleinrichtung (12) derart gesteuert wird, dass die Menge des in den Kanal (8) eingebrachten Wassers von der erfassten Temperatur abhängt.

19. Kühlverfahren nach Anspruch 18, **dadurch gekennzeichnet, dass** die Sprüh- und/oder Rieseleinrichtung (12) derart gesteuert wird, dass nur Wasser in den Kanal (8) eingebracht wird, wenn die erfasste Temperatur oberhalb einer gewählten Temperatur liegt.

20. Kühlverfahren nach einem der Ansprüche 15 bis 19, **dadurch gekennzeichnet, dass** 0,5 bis 10 g Wasser pro kg Luftstrommasse in den Kanal (8) eingebracht werden.

21. Kühlverfahren nach einem der Ansprüche 15 bis 20, **dadurch gekennzeichnet, dass** in mehreren parallel von Luft durchströmten Kanalabschnitten, in denen jeweils wenigstens eine Wärmeabgabeeinheit (7) positioniert ist, in Luftströmungsrichtung vor der Wärmeabgabeeinheit (7) mittels Sprüh- und/oder Rieseleinrichtungen (12) Wasser in Tropfenform in die Kanalabschnitte eingebracht wird.

22. Kühlverfahren nach einem der Ansprüche 15 bis 21, **dadurch gekennzeichnet, dass** vor mehreren in Luftströmungsrichtung in dem Kanal (8) hintereinander liegenden Wärmeabgabeeinheiten (7) mittels Sprüh- und/oder Rieseleinrichtungen (12) Wasser in Tropfenform in den Kanal (8) eingebracht wird.
